# EUROPÄISCHE PATENTSCHRIFT

(11) **EP 1 131 803 B1**
(45) Veröffentlichungstag und Bekanntmachung des Hinweises auf die Patenterteilung: **05.06.2002**
(21) Anmeldenummer: 99963239.1
(22) Anmeldetag: 13.11.1999
(51) Int. Cl.: G08G 1/0968, G06K 9/68

(54) **VORRICHTUNG UND VERFAHREN ZUR VERKEHRSZEICHENERKENNUNG**
DEVICE AND METHOD FOR RECOGNIZING TRAFFIC SIGNS
DISPOSITIF ET PROCEDE DE RECONNAISSANCE D'UNE SIGNALISATION DE TRAFIC

(30) Priorität: 14.11.1998 DE 19852631
(43) Veröffentlichungstag der Anmeldung: 12.09.2001
(73) Patentinhaber: DaimlerChrysler AG, 70567 Stuttgart (DE)
(72) Erfinder: JANSSEN, Reinhard, D-89075 Ulm (DE); LINDNER, Frank, D-89075 Ulm (DE); ULMER, Berthold, D-73728 Esslingen (DE)
(86) Internationale Anmeldenummer: DE9903628
(87) Internationale Veröffentlichungsnummer: WO0030056

(56) Entgegenhaltungen:
- "The Road Sign Recognition System - RS2" ?, [Online] 7. Februar 1996 (1996-02-07), XP002135353 Retrieved from the Internet: <URL:http://euler.fd.cvut.cz/research/rs2/ rs2algorithm.html> [retrieved on 2000-03-30]
- DATABASE INSPEC [Online] INSTITUTE OF ELECTRICAL ENGINEERS, STEVENAGE, GB UCHIMURA K ET AL: "Extraction and recognition of circular road signs using road scene color images" Database accession no. 5923910 XP002135354 & TRANSACTIONS OF THE INSTITUTE OF ELECTRONICS, INFORMATION AND COMMUNICATION ENGINEERS A, APRIL 1998, INST. ELECTRON. INF. & COMMUN. ENG, JAPAN, Bd. J81-A, Nr. 4, Seiten 546-553, ISSN: 0913-5707
- PATENT ABSTRACTS OF JAPAN vol. 1995, no. 03, 28. April 1995 (1995-04-28) & JP 06 348991 A (SUMITOMO ELECTRIC IND LTD), 22. Dezember 1994 (1994-12-22)
- ESCALERA DE LA A ET AL: "ROAD TRAFFIC SIGN DETECTION AND CLASSIFICATION" IEEE TRANSACTIONS ON INDUSTRIAL ELECTRONICS,US,IEEE INC. NEW YORK, Bd. 44, Nr. 6, 1. Dezember 1997 (1997-12-01), Seiten 848-858, XP000750728 ISSN: 0278-0046

## Beschreibung

Die Erfindung betrifft eine Vorrichtung und ein Verfahren zur Verkehrszeichenerkennung gemäß der Oberbegriffe der Patentansprüche 1 und 29.

Der Verkehr auf Straßen, Schienenwegen, Wasserstraßen und Rollfeldern wird durch Verkehrszeichen geregelt. Die durch ein Verkehrszeichen referenzierte Verkehrsregel hat häufig einen räumlichen Gültigkeitsbereich, der sich über Abschnitte des Fahrweges erstreckt, von denen aus der Fahrzeugführer das Verkehrszeichen nicht einsehen kann. Solche Abschnitte werden zum Beispiel durch ein Verkehrszeichen, das den Beginn der Regelanwendung kennzeichnet, und durch ein weiteres Verkehrszeichen, das die Aufhebung der Regelanwendung kennzeichnet, markiert. Für den Fahrzeugführer ist demnach eine Erinnerungshilfe sehr vorteilhaft, die ihm auch Informationen über den Aussagegehalt von Verkehrszeichen liefert (zu welcher Regelbefolgung wird aufgefordert), an denen er bereits vor längerer Zeit vorbeigefahren ist.

Im bisherigem Stand der Technik werden Vorrichtungen und Verfahren vorgeschlagen, die das Ziel verfolgen, den Aussagegehalt eines Verkehrszeichens vollständig zu extrahieren.

Beispielsweise wird in der Patentschrift DE 36 19 824 C2 eine Vorrichtung als Erinnerungshilfe für den Fahrzeugführer vorgeschlagen, die Geschwindigkeitsbeschränkungen durch Verkehrszeichen erfaßt und für die Dauer ihrer Gültigkeit im Fahrzeuginnenraum anzeigt. Diese Vorrichtung beinhaltet einen Bildsensor, eine Informationsverarbeitungseinheit, eine Speichereinheit und eine Anzeigeeinheit. Mittels des Bildsensors werden Bilder von der dem Fahrzeug vorausliegenden Fahrbahn aufgenommen. Mittels der Informationsverarbeitungseinheit werden in diesen Bildern in Echtzeit Verkehrszeichen gesucht und bei Erkennung eines Verkehrszeichens wird dessen Aussagegehalt, hier die Geschwindigkeitsbeschränkung, extrahiert. Der extrahierte Wert der zulässigen Höchstgeschwindigkeit wird in der Speichereinheit gespeichert und für die Dauer der Gültigkeit, d.h. bis zur Erkennung eines aufhebenden Verkehrszeichens, mittels der Anzeigeeinheit angezeigt.

Der Nachteil dieser Vorrichtung besteht in der hohen Rückweisungsquote nicht erkannter Verkehrszeichen und in ihren hohen Kosten. Die tatsächliche Erkennung eines bestimmten Verkehrszeichens, d.h. die Extraktion seines vollständigen Aussagegehaltes, mit ausreichend hoher Wahrscheinlichkeit erfordert möglichst farbige Bilder mit einer möglichst hohen Auflösung (Janssen et al., "Hybrid Approach for Traffic Sign Recognition", Proc. Intelligent Vehicle Symposium, Tokio, Japan, pp. 390-395, 1993). Die Auswertung solcher Bilder in Echtzeit erfordert eine sehr hohe Rechenleistung. Derart leistungsstarke Bildsensoren und Informationsverarbeitungseinheiten sind teuer. Und selbst mit ihnen liegt die Rückweisungsquote gängiger Verkehrszeichenerkennungssysteme in der Größenordnung von einigen Prozenten. Solche Rückweisungsquoten können aus Gewährleistungsgründen nicht toleriert werden.

Aus dem Dokument: "The Road Sign Recognition System - RS2', [Online] 7. Februar 1996 (1996- 02-07), XP002135353
<URL:http://euler.fd.cvut.cz/research/rs2/ rs2algorithm.html>
ist ein Verfahren zur Erkennung von Verkehrszeichen bekannt, das ein sogenanntes "Merkmals-Konzept" offenbart. Dabei werden ähnliche Zeichen in Unterklassen eingeteilt. In einer Art Grobklassifikation wird zuerst die Unterklasse bestimmt und dann darin das Zeichen gesucht. Wenn das Zeichen nicht bestimmt werden kann, so ist zumindest die Unterklasse erkannt (siehe "Partial results").

Um die Anforderung an die Rechenleistung zu minimieren wird in der Schrift DE 197 36 774 A1 vorgeschlagen, daß nach der Detektion eines Verkehrszeichens innerhalb eines Kamerabildausschnittes dieses von dort extrahiert und angezeigt wird. Die Anzeige erfolgt ohne vorherige Auswertung nach dem Inhalt des Verkehrszeichens und ohne vorherige Klassifikation. Der Nachteil dieses Vorgehens ist in der Tatsache, daß keine Aufbereitung der Verkehrszeichenabbildung erfolgt zu sehen. Dies hat zur

Folge, daß bei schwierigen Sichtverhältnissen der Betrachter erhöhter Aufmerksamkeit bedarf die ihm dargestellten Verkehrszeichen zu erkennen und zu deuten.

Die Aufgabe der vorliegenden Erfindung besteht daher einerseits darin, ein Verfahren und eine Vorrichtung zu finden, die es erlauben zuverlässig, mit möglichst geringer Rechenleistung und damit kostengünstig Verkehrszeichen zu erkennen und als Erinnerungshilfe einem Beobachter anzuzeigen. Hierbei soll die Rückweisungsquote im Rahmen der Erkennung der als Verkehrszeichen identifizierten Objekte möglichst gering gehalten werden.

Die Erfindung ist in Bezug auf das zu schaffende Verfahren durch die Merkmale des Patentanspruchs 1 wiedergegeben. In weiteren Ansprüchen (Patentansprüche 2 bis 28) sind vorteilhafte Ausgestaltungen und Weiterbildungen des erfindungsgemäßen Verfahrens enthalten.

Die Erfindung ist in Bezug auf die zu schaffende Vorrichtung durch die Merkmale des Patentanspruchs 29 wiedergegeben. In weiteren Ansprüchen (Patentansprüche 30 bis 64) sind vorteilhafte Ausgestaltungen und Weiterbildungen der erfindungsgemäßen Vorrichtung enthalten.

In weiteren Ansprüchen sind vorteilhafte Verwendungen der erfindungsgemäßen Vorrichtung (Patentansprüche 56 und 58) und des erfindungsgemäßen Verfahrens (Patentansprüche 55 und 57) angegeben.

Die Aufgabe wird durch ein Verfahren bzw. eine entsprechend gestaltete Vorrichtung gelöst, bei welchem die Bilddaten des Bildsensors in einer Informationsverarbeitungseinheit analysiert und klassifiziert und auf Grundlage des Ergebnisses einer Klassifikation Bildausschnitte und/oder in einer Speichereinheit gespeicherte, eine symbolische Darstellung repräsentierende Bilddaten in einer Speichereinheit ablegt und mittels einer Anzeigeeinheit darstellt. Hierbei wird im Rahmen der Analyse in der Informationsverarbeitungseinheit ermittelt, ob die Bilddaten des Bildsensors ein oder mehrere Objekte enthalten, weiche mit hinreichender Wahrscheinlichkeit Verkehrszeichen sind. In Folge werden die so ermittelten Objekte einer Weiterverarbeitung und Klassifikation zugeführt. In besonders vorteilhafter Weise, wird im Rahmen der Erfindung bei der Weiterverarbeitung der Bilddaten der Objekte eine Separierung in verkehrszeichenspezifische Oberklassen und Unterklassen vorgenommen. Dabei werden entsprechende klassenspezifische Merkmalsdaten extrahiert und einer getrennten Klassifikation zugeführt. Abhängig davon ob die klassenspezifischen Merkmalsdaten bei der Klassifikation mit hoher Wahrscheinlichkeit korrekt erkannt wurden, werden sie durch entsprechende in einer Speichereinheit gespeicherte, die symbolische Darstellung repräsentierende Bilddaten oder durch die entsprechenden ursprüngliche vom Bildsensor stammenden Bilddaten ersetzt. Die aus dieser Ersetzung resultierenden Bilddaten werden zu einem synthetischen Bild eines Verkehrszeichens kombiniert und dieses Bild dann in der Speichereinheit gespeichert und mittels der Anzeigeeinheit zur Anzeige gebracht.

Ein wesentlicher Vorteil der Erfindung besteht darin, daß mit ihr nicht mehr das rechenaufwendige und mit hohen Rückweisungsquoten behaftete Problem der Klassifikation eines in seiner Gesamtheit recht komplexen Verkehrszeichen gelöst werden muß, sondern das Problem wird durch die der Klassifikation vorangegangene Separierung der detektierten Objekte in verkehrszeichenspezifische Oberklassen und Unterklassen auf eindeutigere und somit einfachere Klassifikationsprobleme zurückgeführt. Hierbei werden gleichermaßen die Anforderungen an die notwendige Rechenleistung und Bildqualität reduziert.

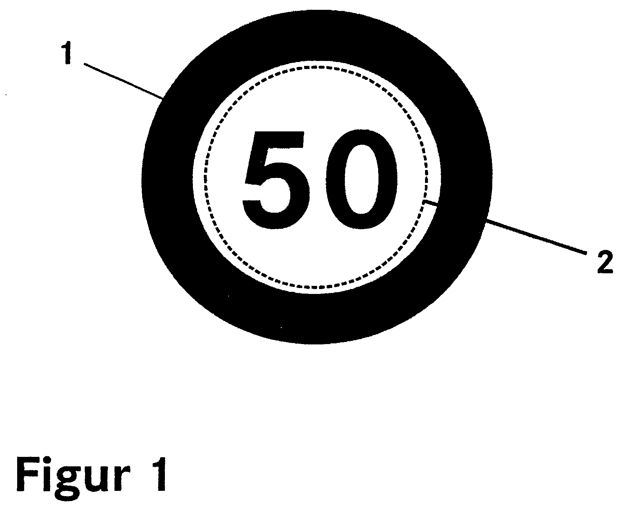

Beispielhaft soll hier anhand von **Figur** 1 die Aufteilung eines Verkehrszeichens in verkehrszeichenspezifische Oberklassen **1** und Unterklassen **2** erläutert werden. Es handelt sich bei dem in **Figur 1** dargestellten Verkehrszeichen um ein Geschwindigkeitsbegrenzungszeichen. Die verkehrszeichenspezifische Oberklasse **1** dieses Verkehrszeichen ist die Klasse der Verbotszeichen, welche als Merkmalsdaten eine Runde Form mit einem innenliegenden Symbol aufweisen. Im speziellen Fall eines Geschwindigkeitsbegrenzungszeichens ist das innenliegende Symbol eine Zahl welche von einem breiten, roten Ring umschlossen ist. Im Fall des Geschwindigkeitsbegrenzungszeichens ist das innenliegende Symbol, d.h. die Angabe auf welche Geschwindigkeit eine Fahrgeschwindigkeit zu begrenzen ist, ein Element der verkehrszeichenspezifischen Unterklasse **2**.

Eine andere wichtige Gruppe von Verkehrszeichen bilden die Warnzeichen. Hier ist die verkehrszeichenspezifische Oberklasse **1** durch die dreieckige Form des Verkehrszeichens und ein innenliegendes Gefahrensymbol, welches von einem breiten, roten Dreieck umschlossen ist, definiert. Die Elemente der verkehrszeichenspezifischen Unterklasse **2** werden durch die innenliegenden Gefahrensymbole gebildet.

Erfindungsgemäß soll nun mit vergleichsweise geringer Rechenleistung und geringem apparativen Aufwand (beispielsweise einer Monochromkamera anstatt einer hochauflösenden Farbkamera) in Echtzeit nachgeprüft werden, ob es sich bei einem Objekt bestimmter Form innerhalb des aufgenommenen Bildes um ein Verkehrszeichen handelt. Ist dies der Fall, so werden die klassenspezifischen Merkmalsdaten des Objekts einer getrennten Klassifikation zur Identifikation des Verkehrszeichens zugeführt.

In einer vorteilhaften Ausgestaltung der Erfindung kommt zur Identifikation des Verkehrszeichens ein hierarchisch organisierter Klassifikator zum Einsatz. Die Klassifikation erfolgt dabei in mehreren Stufen. Hierzu werden zuerst nur die der Oberklasse des Objektes zugehörigen Merkmalsdaten einer Klassifikation zugeführt. Bei erfolgreicher Klassifikation (d.h. die Klasse konnte mit hoher Wahrscheinlichkeit korrekt erkannt werden) werden die Merkmalsdaten durch die entsprechende in der Speichereinheit gespeicherte symbolische Darstellung der Oberklasse ersetzt. Blieb die Klassifikation erfolglos (d.h. die Klasse konnte nicht mit hoher Wahrscheinlichkeit korrekt erkannt werden) werden die Merkmalsdaten der Oberklasse und die Merkmalsdaten der Unterklasse durch die entsprechenden ursprünglichen vom Bildsensor stammenden Bilddaten ersetzt und die Klassifikationprozedur wird beendet. Ein weiterer Schritt innerhalb der Klassifikationsprozedur wird dann eingeleitet, wenn die Klassifikation der Oberklasse erfolgreich war. In diesem Fall werden nachfolgend die der Unterklasse des Objektes zugehörigen Merkmalsdaten einem Klassifikator zugeführt. Bei erfolgreicher Klassifikation dieser Unterklasse (d.h. die Klasse konnte mit hoher Wahrscheinlichkeit korrekt erkannt werden) werden die Merkmalsdaten durch die entsprechende in der Speichereinheit gespeicherte symbolische Darstellung der Unterklasse ersetzt. Andererseits werden bei erfolgloser Klassifikation (d.h. die Klasse konnte nicht mit hoher wahrscheinlichkeit korrekt erkannt werden) die Merkmalsdaten der Unterklasse durch die entsprechenden ursprünglichen vom Bildsensor stammenden Bilddaten ersetzt.

Mit diesem hierarchischen Vorgehen wird eine Verkehrszeichenerkennung mit geringer Rückweisungsquote zur Verfügung gestellt. Dabei können die beiden hierarchischen Stufen zur Identifikation der Oberklasse beziehungsweise zur Identifikation der Unterklasse selbst wieder hierarchisch organisiert sein. Bezüglich der Gestaltung der innerhalb der hierarchischen Klassifikation eingesetzten Klassifikatoren ist es denkbar, diese so zu gestalten, daß sie auf Grundlage eines Vergleichs von Distanzmaßen der ihnen gelieferten Merkmalsdaten von in der Speichereinheit gespeicherten klassentypischen Merkmalsdatensätzen entscheiden. Hierbei wird das als Verkehrszeichen identifizierte Objekt jener Oberklasse zugeordnet, zu welcher die Distanz im Merkmalsraum am geringsten ist. Es ist dabei möglich eine Toleranzschwelle zu definieren der mit dem minimalen Distanzwert verglichen wird, wobei das Unterschreiten des Toleranzwertes durch den Distanzwert als Hinweis auf eine mit hoher Wahrscheinlichkeit korrekt erfolgte Erkennung dient. In einer anderen vorteilhaften Ausgestaltung ist es auch möglich die Klassifikatoren so zu gestalten, daß sie mit Hilfe von verkehrszeichenspezifischen Lernstichproben trainiert werden können. Dieses Vorgehen ist besonders vorteilhaft, da die Qualität der von dem Bildsensor gelieferten Bilddaten stark von Umweltfaktoren wie Wetter und Lichtverhältnissen abhängig sind.

Für den Fall, daß bei der Analyse der Bilddaten des Bildsensors ein an dem Verkehrszeichen angebrachtes Zusatzschild erkannt wurde, kann in einer möglichen Ausgestaltung der Erfindung dieses dann auf der Anzeigeeinheit dargestellt werden, wenn im Rahmen der Klassifikation zumindest die Oberklasse des zugehörigen Verkehrszeichens mit hoher Wahrscheinlichkeit erkannt wurde. Die Anzeige des Zusatzschildes ist aus dem Grund an die Bedingung gekoppelt, daß zumindest die Oberklasse des zugehörigen Verkehrszeichens erkannt wurde, um bei uneindeutiger Identifikation des Verkehrszeichens den Beobachter nicht auch noch mit einer Zusatzinformation zu belasten. Es ist auch davon auszugehen, daß bei Sichtverhältnissen, welche eine eindeutige Klassifikation des Verkehrszeichens nicht mehr zulassen, es auch nicht möglich ist die Information, welche auf dem Zusatzschild dargeboten wird auszuwerten. Soll der notwendige Aufwand bezüglich der Erkennungsieistung weiter minimiert werden, so ist es auch möglich nicht mehr explizit die Bilddaten auf Zusatzschilder hin zu analysieren, sonder einfach in dem Fall, daß im Rahmen der Klassifikation zumindest die Oberklasse eines Verkehrszeichens erkannt wurde mittels der Anzeigeeinheit diejenigen Bilddaten angezeigt werden, die von dem Bereich aus der Umgebung des Verkehrszeichens stammen, in welchem sich klassenspezifisch ein Zusatzschild befinden würde. Hierbei soll keine Überprüfung auf die tatsächliche Existenz eines solchen Zusatzschildes vorgenommen werden. Um bei einer derartigen Ausgestaltung der Erfindung die Anzahl von Anzeigen, welche keine sinnvolle Information (z.B. es ist tatsächlich kein Zusatzschild vorhanden) enthalten, zu minimieren ist es vorstellbar auf einfache Weise eine rechen-extensive Klassifikation zu implementieren, welche offensichtlich nutzlose Bildinformation verwirft und nicht zur Anzeige bringt.

Die Analyse der vom Bildsensor gelieferten Bilddaten bezüglich des Vorhandenseins von einem oder mehreren Objekten, welche mit hinreichender Wahrscheinlichkeit Verkehrszeichen sind, kann in einer möglichen Ausgestaltung der Erfindung in zwei Verfahrensschritte gegliedert werden. in einem ersten Schritt werden, vorzugsweise anhand von Farbwerten und/oder räumlichen Positionen, die Bildbereiche ermittelt welche mit überdurchschnittlicher Wahrscheinlichkeit Verkehrszeichen enthalten könnten. Diese Bereiche (Regions of Interest) werden in einem zweiten Verfahrensschritt einer geometrischen Analyse unterzogen, welche sich vorzugsweise Korrelationsverfahren bedient, um Objekte zu ermitteln, welche vorgegebene Formen besitzen. Bei der Verkehrszeichenerkennung interessieren hierbei insbesondere runde (Gebotsschilder) und eckige (Warnschilder) Formen.

Es ist weiterhin denkbar das erfindungsgemäße Verfahren dahingehend zu optimieren, daß aus einer Abfolge von Bildern, die während der Vorbeifahrt des Fahrzeugs an einem als Verkehrszeichen erkannten Objekt aufgenommen werden, jeweils das beste Bild ausgewählt wird. Dabei wird die Auswahl anhand definierter Qualitätakriterien durchgeführt, welche sich vorzugsweise an der Größe und/oder dem Kontrast und/oder der Helligkeit der Bilddaten des Objektes orientieren. Nur das mittels dieser Bilddaten generierte synthetische Bild eines Verkehrszeichens wird in der Speichereinheit gespeichert und mittels der Anzeigeeinheit angezeigt.
Ein Vorteil einer derartigen Ausgestaltung besteht darin, daß so einerseits Speicherplatz gespart wird und andererseits dem Beobachter an Stelle eines schnellen Anzeigenwechsels des gleichen Verkehrszeichens in unterschiedlicher Qualität ein gleichbleibend gutes Bild des Verkehrszeichens angezeigt wird. Dadurch wird seine Aufmerksamkeit nicht abgelenkt, sondern steht ungeteilt dem Verkehr und dem tatsächlichen Aussagegehalt des Verkehrszeichens zur Verfügung.

Ein weiteres vorteilhaftes Ausgestaltungsmerkmal des genannten Verfahrens besteht darin, daß die Bildbereiche, die zeichenspezifische Merkmalsdaten enthalten, vor Ihrer Anzeige derart aufbereitet werden, daß sie besser erkennbar sind. Dies ist unter anderem möglich durch Normierung von Größe und/oder Kontrast und/oder Helligkeit und oder Farbton. Ein Vorteil einer derartigen Ausgestaltung besteht darin, daß so dem Fahrzeugführer die Erkennung eines speziellen Verkehrszeichens erleichtert wird.

Vorteilhaft wirkt es sich bei der Erfindung aus, wenn mittels einer im System integrierten Positionsbestimmungseinheit die Position eines als Verkehrszeichen erkannten Objektes bestimmt wird. Diese Position kann dann zusätzlich zu dem synthetischen Bild des Verkehrszeichens gespeichert werden. Es ist ebenfalls denkbar, ferner auch den Zustand und/oder die Sichtbarkeit und/oder die Größe des jeweiligen Verkehrszeichen abzuspeichern. Dies ist insbesondere für den Fall hilfreich, daß die Erfindung im Rahmen von einer Verkehrsraumüberwachung und -wartung eingesetzt wird. Es mag ebenso auch hilfreich sein, wenn auf die gespeicherten Daten zurückgegriffen werden kann, für den Fall daß sich Änderungen der Position beziehungsweise des Zustandes eines Verkehrszeichen ergeben und hierauf der Beobachter mittels eines optischen oder akustischen Signals aufmerksam gemacht werden soll.

In einer vorteilhaften Ausführungsform der Erfindung ist in der Speichereinheit ein Programm zur Anwendung einer Entscheidungslogik gespeichert, mittels derer die Informationsverarbeitungseinheit die Anzeigeeinheit derart steuert, daß sie die vereinfachte Darstellung eines als Verkehrszeichen erkannten Objektes solange anzeigt, bis ein neues Objekt als Verkehrszeichen erkannt wird, vorzugsweise als Verkehrszeichen der gleichen oder einer korrespondierenden Klasse erkannt wird, und dessen vereinfachte Darstellung die vorherige ersetzt. Der Vorteil dieser Ausgestaltung liegt darin, daß die Bildfläche der Anzeigeeinheit dadurch sehr klein gestaltet werden kann, nämlich der Fläche der Darstellung eines einzelnen Verkehrszeichen entsprechend. Dies ist aus Gründen der Übersichtlichkeit und der generellen Begrenzung des in einem Fahrzeugcockpit zur Verfügung stehenden Raums vorteilhaft.

Besonders vorteilhaft ist die vorzugsweise Ausgestaltung der Entscheidungslogik hinsichtlich eines Verkehrszeichens der gleichen oder einer korrespondierenden Klasse (Beispiel: die mit der Klasse der Geschwindigkeitsbeschränkungen korrespondierende Klasse ist die Klasse der Aufhebungen der Geschwindigkeitsbeschränkungen). Hierdurch wird zwar mehr Platz auf der Anzeigeeinheit benötigt, aber dem Fahrer können so auch mehrere gleichzeitig gültige Verkehrszeichen angezeigt werden. Dabei wird jedoch ausgeschlossen, daß sich die Verkehrszeichen gegenseitig aufheben und so unnötig Platz auf der Anzeigeeinheit beanspruchen.

In einer weiteren vorteilhaften Ausbildung der Erfindung besitzt die Anzeigeeinheit zusätzlich eine Einstelleinheit, mittels welcher die maximale Dauer der Anzeige der Darstellung des synthetischen Bildes eines Verkehrszeichen eingestellt wird. Dadurch kann der Fahrzeugführer die Dauer der Anzeige seinen persönlichen Bedürfnissen und Vorlieben gemäß anpassen. Außerdem wird die Teilung seiner Aufmerksamkeit zwischen dieser Anzeigeeinheit und anderen wichtigen Anzeigen im Fahrzeugcockpit sowie dem äußeren Verkehrsgeschehen auf die Dauer der Anzeige begrenzt.

In einer weiteren möglichen die Anzeige der Verkehrszeichen betreffenden Ausführung der Erfindung ist in der Speichereinheit ein Programm gespeichert ist, welches die zurückgelegte Wegstrecke zwischen der aktuellen Fahrzeugposition und der Position des zuletzt erkannten Verkehrszeichens einer bestimmten Klasse von Verkehrszeichen mit Hilfe von mit an die Informationseinheit gekoppelten Einrichtungen oder Sensoren, ermittelt. Zur Ermittlung der Wegstrecke dienen vorzugsweise ein Fahrzeugtachometer oder ein Radsensor zur Ermittlung der zurückgelegten Strecke und ein Zeitgeber, welche an die Informationseinheit gekoppelt sind, wobei es denkbar ist die Ankopplung unter Rückgriff auf einen oftmals in Fahrzeugen bereits vorhandenen Fahrzeugdatenbus zu realisieren. Es ist nun möglich durch ein in der Speichereinheit gespeichertes Programm, welches die Anwendung einer Entscheidungslogik zuläßt, die Informationsverarbeitungseinheit zu veranlassen die Anzeigeeinheit derart zu steuern, daß sie das synthetische Bild eines Verkehrszeichens genau so lange anzeigt, bis eine in der Speichereinheit vorgegebene Wegstrecke zurückgelegt ist, welche vorzugsweise klassenspezifisch ist. Andererseits ist es auch denkbar in der Speichereinheit ein Programm zu speichern, welches zur Anwendung einer Entscheidungslogik mittels derer die Informationsverarbeitungseinheit die Anzeigeeinheit so steuert, daß sie das synthetische Bild eines Verkehrszeichens solange anzeigt, bis ein neues Objekt als Verkehrszeichen durch den Klassifikator erkannt wird, vorzugsweise als Verkehrszeichen der gleichen oder einer korrespondierenden Klasse, und dessen synthetische Bilddarstellung die vorherige ersetzt.

Ein weiteres vorteilhaftes Ausgestaltungsmerkmal der Erfindung besteht darin, daß die Anzeigeeinheit zusätzlich einen akustischen Signalgeber enthält, welcher, sobald ein Objekt als Verkehrszeichen erkannt wurde, ein vorzugsweise klassenspezifisches, akustisches Signal ausgibt. Der Vorteil dieser Ausgestaltung besteht in der erhöhten Sicherheit der Wahrnehmung des Verkehrszeichens durch den Fahrzeugführer.

Ein weiteres vorteilhaftes Ausgestaltungsmerkmal der Erfindung besteht darin, daß der digitale Bildsensor eine oder mehrere, vorzugsweise monochrome, Digitalkameras enthält, die derart angeordnet sind, daß ihr gemeinsames Blickfeld ausreicht, um alle für den Fahrweg eines Fahrzeuges relevanten Verkehrszeichen unabhängig von der horizontalen und/oder vertikalen Krümmung des Fahrweges zu erfassen. Eine derartige Anordnung der Kameras gewährleistet die sichere Aufnahme aller Verkehrszeichen entlang der Fahrtstrecke. Monochrome Kameras sind für die Funktionstüchtigkeit der Vorrichtung ausreichend, bei gleicher Auflösung aber deutlich kostengünstiger als eine Farbkamera oder besitzen bei gleichem Preis eine deutlich höhere Auflösung.

Eine besonders vorteilhafte Ausgestaltung der Erfindung ergibt sich wenn man das System zur Verkehrszeichenerkennung, mit mindestens einem kartenbasierten Navigationssystem und/oder einem Verkehrsinformationssystemen verbindet, so daß von dort stammende Informationen bei der Erkennung und/oder der Anzeige von Inhalten von Verkehrszeichen ausnutzt werden können. In einer denkbaren Ausführungsform, wird die Kommunikation zwischen den Systemen über den Fahrzeugbus realisiert.

In vorteilhafter Weise kann so das System zur Erkennung von Verkehrszeichen auf erhöhte Leistung geschaltet werden, wenn auf Grundlage von Informationen wie sie von kartenbasierten Navigationssystem und/oder einem Verkehrsinformationssystemen bekannt werden, daß das Fahrzeug einen Bereich passiert, der bezüglich einer zuverlässigen Erkennung von Verkehrszeichen problematisch ist. Beispiele solcher besonders zu berücksichtigender Bereiches sind unter anderem Ortseingänge und Ortsausgänge. Dort befinden sich Ortseingangs- und Ortsausgangstafeln, welche Geschwindigkeitsbeschränkungen, bzw. Aufhebungen dieser Beschränkungen implizieren. Die Tafeln sind jedoch nicht wie üblich kreisrund, sondern rechteckig. Die Tafeln enthalten sind leicht mit Werbetafeln zu verwechseln, insbesondere dann, wenn die Verkehrszeichenerkennung mittels monochromer Kameras durchgeführt wird, da hier die relativ signifikante gelbe Färbung der Tafeln nicht zur notwendigen Geltung kommt. Ein weiterer besonders zu berücksichtigender Bereich ist im Umfeld von Verkehrsbeeinflussungsanlagen und Wechselschildern gegeben. Hier muß mit gesonderten Darstellung und Ausprägung der Verkehrszeichen gerechnet werden, so z.B. mit einer inversen Darstellung der Schwarz- und Weißanteile der Verkehrszeichen aus Gründen besserer Nachtsichtbarkeit. Auch ist mit einem plötzlich auftretenden Wechsel oder Einschalten des Verkehrszeichensymbols zu rechnen, z.B, plötzliche Beschränkung auf Tempo 120 km/h auf Autobahnen. Eine besondere Art von Verkehrszeichen stellen Ampeln dar. Prinzipiell sind sie mit einem Wechselschild vergleichbar, da sich auch der Zustand ihrer Anzeige ändern kann und somit einer erhöhten Aufmerksamkeit bedarf. Durch kartenbasierte Information ist es jedoch möglich das System zur Verkehrszeichenerkennung in Bereichen von Ampelanlagen (z.B.: Kreuzungen, Bahnübergänge) mit erhöhter Erkennungsleistung zu betreiben.

Während die vorangegangen Beispiele hauptsächlich in alleinigem Zusammenspiel mit Informationen von kartenbasierten Navigationssystemen zu sehen sind, werden nachfolgen beispielhaft Situationen dargestellt, bei denen erhöhte Erkennungsleistung gefordert wird und welche gewinnbringend mit Informationen die von Verkehrsinformationssystem stammen verknüpft werden. Dies ist im wesentlichen die Information, daß in einem bestimmten vom Fahrzeug befahrenen Bereich schlechte Sicht durch Nebel oder Regen vorherrscht. In einer solchen Situation ist verstärkt mit kontrastarmen Bilddaten zu rechnen, so daß das System zur Verkehrszeichenerkennung vorzugsweise verstärkt auf eine Kontrastverbesserung der Bilddaten hinwirken sollte.

Vorteilhaft wirkt sich auch die Einbeziehung von Stauwarnungen aus, da hier dem Beobachter frühzeitig, in sinnvollem Abstand zur vorhanden Verkehrsstörung im Rahmen der Anzeige von Verzeichen ein Stausymbol dargeboten werden kann, ohne daß erste ein solches Verkehrszeichen passiert werden muß.

Durch diese erfindungsgemäße Möglichkeit die Verkehrszeichenerkennung temporär in ihrer Leistung zu variieren eröffnet die Möglichkeit eine Erkennung von Verkehrszeichen ökonomisch zu realisieren. Es ist auch in vorteilhafter Weise nicht notwendig ein System zur bereit zustellen, welches im normalen Betrieb mangelhaft ausgelastet ist und nur in kritischen Situationen voll ausgelastet wird. Sondern es wird die Möglichkeit eröffnet, mittels moderner Mulitprozessor-Datenverarbeitung im Rückgriff auf die interne Fahrzeugdatenkommunikation und die in modernen Fahrzeugen in einer Vielzahl vorhandene Datenprozessoren, die momentan freie, nicht ausgenutzte Rechnerleistung für einen sinnvollen, ökonomischen Einsatz zu nutzen.

Ein weiteres vorteilhaftes Ausgestaltungsmerkmal der Erfindung besteht darin, daß in einem bereitgestellten Datenspeicher Informationen über die Art und/oder die Position und/oder den Zustand und/oder die Sichtbarkeit und/oder die Größe des erkannten Verkehrszeichens gespeichert wird. Dabei kann dieser Datenspeicher entweder dem kartenbasierten Navigationssystem bzw. dem Verkehrsinformationssystem zugeordnet sein, oder aber auch Bestandteil des Systems zur Verkehrszeichen Erkennung und/oder Anzeige sein. Durch die Kombination mit dieser Datenspeicherung kann der Beobachter durch ein akustisches oder optisches Signal darauf aufmerksam gemacht werden, dass sich entlang einer bereits einmal befahrenen Wegstrecke eine Änderung in Bezug auf die Position beziehungsweise des Vorhandenseins eines Verkehrszeichens ergeben hat. Dadurch ist es möglich einen Beobachter zum Beispiel auf baustellen-bedingte Verkehrsregelungen oder bei geänderter Vorfahrtsregelung im Kreuzungsbereich. In vorteilhafterweise wird gleichermaßen der Beobachter auch dann einen Warnhinweis erhalten, wenn das System zur Verkehrszeichenerkennung ein tatsächlich vorhandenes Verkehrszeichen nicht erkennen oder nur ungenügend klassifizieren konnte.

Weiterhin wirkt sich bei der Erfindung positiv aus, daß auf Grundlage der kartenbasierten Positionsbestimmung die Möglichkeit eröffnet wird, ein Programm zur Anwendung einer Entscheidungslogik zu veranlassen, ein Verkehrszeichen so lange anzuzeigen, bis eine vorgegebene Wegstrecke zurückgelegt ist. Diese vorgegebene Wegstrecke ist vorzugsweise klassenspezifisch und kann durch eine Speichereinheit zur Verfügung gestellt werden. Es ist beispielsweise in der Bundesrepublik Deutschland eine Straßenauffahrt gleichbedeutend mit einer impliziten Aufhebung von Ge- und Verboten, wie Geschwindigkeitsbegrenzungen. Zudem müssen Geschwindigkeitsbegrenzungen nach spätestens 3 km erneuert werden, ansonsten gelten sie als aufgehoben. Durch dieses erfindungsgemäße Merkmal wird also erreicht, daß ein Verkehrszeichen, auch ohne explizite Aufhebung, nur so lange wie unbedingt notwendig angezeigt wird.

## Patentansprüche

1. Verfahren zur Erkennung und Anzeige von Verkehrszeichen,
welches die Bilddaten eines Bildsensors in einer Informationsverarbeitungseinheit analysiert und klassifiziert und auf Grundlage des Ergebnisses einer Klassifikation Bildausschnitte und/oder in einer Speichereinheit gespeicherte, eine symbolische Darstellung repräsentierende Bilddaten in einer Speichereinheit ablegt und mittels einer Anzeigeeinheit darstellt,
wobei im Rahmen der Analyse in der Informationsverarbeitungseinheit ermittelt wird, ob die Bilddaten des Bildsensors ein oder mehrere Objekte enthalten, welche mit hinreichender Wahrscheinlichkeit Verkehrszeichen sind,
und in folge diese Objekte einer Weiterverarbeitung und Klassifikation zugeführt werden,
**dadurch gekennzeichnet,**
**daß** bei der Weiterverarbeitung der Bilddaten der Objekte eine Separierung in verkehrszeichenspezifische Oberklassen und Unterklassen vorgenommen wird,
**daß** bei der Separierung entsprechende klassenspezifische Merkmalsdaten extrahiert werden,
**daß** die klassenspezifischen Merkmalsdaten einer getrennten Klassifikation zugeführt werden,
**daß** die klassenspezifischen Merkmalsdaten abhängig davon, ob sie bei der Klassifikation mit hoher Wahrscheinlichkeit korrekt erkannt wurde, durch entsprechende in einer Speichereinheit gespeicherte, die symbolische Darstellung repräsentierende Bilddaten oder durch die entsprechende ursprünglich vom Bildsensor stammenden Bilddaten ersetzt werden, und die aus dieser Ersetzung resultierenden Bilddaten zu einem synthetischen Bild eines Verkehrszeichens kombiniert werden und dieses Bild in der Speichereinheit gespeichert und in der Anzeigeeinheit zur Anzeige gebracht wird.

2. Verfahren nach Anspruch 1, **dadurch gekennzeichnet, daß** die Klassifikation hierarchisch, in mehreren Klassifikationsstufen erfolgt.

3. Verfahren nach Anspruch 2, **dadurch gekennzeichnet, daß** die Klassifikationsstufen im wesentlichen wie folgt gegliedert sind:
a) zuerst werden nur die der Oberklasse des Objektes zugehörigen Merkmalsdaten einem Klassifikator zugeführt ,
aa) bei erfolgreicher Klassifikation (die Klasse konnte mit hoher Wahrscheinlichkeit korrekt erkannt werden) werden die Merkmalsdaten durch die entsprechende in der Speichereinheit gespeicherte symbolische Darstellung der Oberklasse ersetzt.
ab) bei erfolgloser Klassifikation (die Klasse konnte nicht mit hoher wahrscheinlichkeit korrekt erkannt werden) werden die Merkmalsdaten der Oberklasse und die Merkmalsdaten der Unterklasse durch die entsprechenden ursprünglichen vom Bildsensor stammenden Bilddaten ersetzt.
b) war die Klassifikation der Oberklasse erfolgreich, werden nachfolgend die der Unterklasse des Objektes zugehörigen Merkmalsdaten einem Klassifikator zugeführt,
ba) bei erfolgreicher Klassifikation (die Klasse konnte mit hoher Wahrscheinlichkeit korrekt erkannt werden) werden die Merkmalsdaten durch die entsprechende in der Speichereinheit gespeicherte symbolische Darstellung der Unterklasse ersetzt.
bb) bei erfolgloser Klassifikation (die Klasse konnte nicht mit hoher wahrscheinlichkeit korrekt erkannt werden) werden die Merkmalsdaten der Unterklasse durch die entsprechenden ursprünglichen vom Bildsensor stammenden Bilddaten ersetzt.

4. Verfahren nach einem der vorhergehenden Ansprüche, **dadurch gekennzeichnet, daß** die bei der Klassifikation zum Einsatz kommenden Klassifikatoren mittels exemplarischen Lernstichproben trainiert werden.

5. Verfahren nach einem der vorhergehenden Ansprüche, **dadurch gekennzeichnet, daß** die bei der Klassifikation zum Einsatz kommenden Klassifikatoren auf Grundlage eines Vergleichs von Distanzmaßen der ihnen gelieferten Merkmalsdaten von in der Speichereinheit gespeicherten klassentypischen Merkmalsdatensätzen entscheiden.

6. Verfahren nach einem der Ansprüche 1 bis 5, **dadurch gekennzeichnet, daß** für den Fall, daß im Rahmen der Analyse der Bilddaten des Bildsensors ein an dem Verkehrszeichen angebrachtes Zusatzschild erkannt wurde, dieses auf der Anzeigeeinheit dargestellt wird, wenn bei der Klassifikation zumindest die Oberklasse des Verkehrszeichens mit hoher Wahrscheinlichkeit erkannt wurde.

7. Verfahren nach einem der Ansprüche 1 bis 5, **dadurch gekennzeichnet, daß** für den Fall, daß im Rahmen der Klassifikation zumindest die Oberklasse eines Verkehrszeichens erkannt wurde, mittels der Anzeigeeinheit diejenigen Bilddaten angezeigt werden, die von dem Bereich aus der Umgebung des Verkehrszeichens stammen, in welchem sich typischerweise ein Zusatzschild befindet.

8. Verfahren nach Anspruch 7, **dadurch gekennzeichnet, daß** der anzeige der Bilddaten eine Klassifikation vorangestellt wird, welche offensichtlich nutzlose Bildinformation verwirft und nicht zur Anzeige bringt.

9. Verfahren nach einem Ansprüche 1 bis 8, **dadurch gekennzeichnet, daß** im Rahmen der Analyse in der Informationsverarbeitungseinheit während welcher ermittelt wird, ob ein Bild ein oder mehrere Objekte enthält, welche mit hinreichender Wahrscheinlichkeit Verkehrszeichen sind, in zwei Verfahrensschritte gegliedert ist, dergestalt daß
a) in einem ersten Verfahrensschritt Bildbereiche ermittelt werden, vorzugsweise anhand von Farbwerten und/oder räumlichen Positionen, welche mit überdurchschnittlicher Wahrscheinlichkeit Verkehrszeichen enthalten,
b) und in einem zweiten Verfahrensschritt in diesen Bildbereichen mittels geometrischer Analyse, vorzugsweise mittels Korrelationsverfahren, Objekte ermittelt werden, welche eine vorgegebene, vorzugsweise runde oder dreieckige, Form besitzen.

10. Verfahren nach einem der vorhergehenden Ansprüche, **dadurch gekennzeichnet, daß** aus einer Abfolge von Bildern, die während der Vorbeibewegung des Fahrzeugs an einem als Verkehrszeichen erkannten Objekt aufgenommen werden, jeweils das beste Bild ausgewählt wird, wobei die Auswahl anhand definierter Qualitätskriterien durchgeführt wird, vorzugsweise anhand von Größe und/oder Kontrast und/oder Helligkeit des als Verkehrszeichen erkannten Objektes, und nur die auf Grundlage dieses besten Bildes generierte synthetische Bild eines Verkehrszeichens in der Speichereinheit gespeichert und auf der Anzeigeeinheit angezeigt wird.

11. Verfahren nach einem der vorhergehenden Ansprüche **dadurch gekennzeichnet, daß** bei der Kombination der Bilddaten zu einem synthetischen Bild eines Verkehrszeichen, diejenigen Bilddaten, die den ursprünglich vom Bildsensor stammenden Bilddaten entsprechen, hinsichtlich einer besseren Erkennbarkeit aufbereitet werden, derart daß sie
a) größennormiert werden und/oder
b) kontrastnormiert werden und/oder
c) helligkeitsnormiert werden und/oder
d) Farbtonnormiert werden.

12. Verfahren nach einem der vorhergehenden Ansprüche **dadurch gekennzeichnet, daß** zusätzlich die Position eines als Verkehrszeichen erkannten Objektes mittels einer Positionsbestimmungseinheit bestimmt wird.

13. Verfahren nach einem der vorhergehenden Ansprüche, **dadurch gekennzeichnet, daß** die Anzeigeeinheit von der Informationsverarbeitungseinheit durch ein in der Speichereinheit gespeichertes Programm zur Anwendung einer Entscheidungslogik derart gesteuert wird, daß sie das synthetische Bild eines Verkehrszeichens solange anzeigt, bis ein neues Objekt als Verkehrszeichen erkannt wird, und dessen vereinfachte Darstellung die vorherige ersetzt.

14. Verfahren nach einem der vorhergehenden Ansprüche, **dadurch gekennzeichnet, daß** mittels einer in der Anzeigeeinheit enthaltenen Einstelleinheit die maximale Dauer der Anzeige des synthetischen Bildes eines Verkehrszeichens eingestellt wird.

15. Verfahren nach einem der vorhergehenden Ansprüche, **dadurch gekennzeichnet, daß** durch ein Programm in der Speichereinheit die zurückgelegte Wegstrecke zwischen der aktuellen Fahrzeugposition und der Position des zuletzt erkannten Verkehrszeichens einer bestimmten Klasse von Verkehrszeichen mit Hilfe von an die Informationseinheit gekoppelten Einrichtungen oder Sensoren, ermittelt wird.

16. Verfahren nach Anspruch 15, **dadurch gekennzeichnet, daß** die Ermittlung der Wegstrecke durch einen an die Informationseinheit gekoppelten Fahrzeugtachometer oder einen Radsensor zur Ermittlung der zurückgelegten Strecke und einen Zeitgeber erfolgt.

17. Verfahren nach einem der Ansprüche 15 und 16, **dadurch gekennzeichnet, daß** die Datenübertragung den an die Informationseinheit gekoppelten Einrichtungen und Sensoren zur Ermittlung der Wegstrecke über einen Fahrzeugdatenbus erfolgt.

18. Verfahren nach einem der vorhergehenden Ansprüche, **dadurch gekennzeichnet**, durch ein in der Speichereinheit gespeichertes Programm eine Entscheidungslogik gesteuert wird, mittels derer die Informationsverarbeitungseinheit die Anzeigeeinheit derart lenkt, daß sie das synthetische Bild eines Verkehrszeichens solange anzeigt, bis ein neues Objekt als Verkehrszeichen erkannt wird, vorzugsweise als Verkehrszeichen der gleichen oder einer korrespondierenden Klasse erkannt wird, und dessen vereinfachte Darstellung die vorherige ersetzt.

19. Verfahren nach einem der vorhergehenden Ansprüche, **dadurch gekennzeichnet, daß** ein akustischer Signalgeber innerhalb der Anzeigeeinheit, sobald ein Objekt als Verkehrszeichen erkannt wurde, ein vorzugsweise klassenspezifisches, akustisches Signal ausgibt.

20. Verfahren nach einem der vorhergehenden Ansprüche, **dadurch gekennzeichnet, daß** durch eine geeignete Anordnung von einer oder mehrerer, vorzugsweise monochromen Digitalkameras innerhalb des digitalen Bildsensors, alle für den Fahrweg eines Fahrzeuges relevanten Verkehrszeichen unabhängig von der horizontalen und/oder vertikalen Krümmung des Fahrweges erfaßt werden.

21. Verfahren nach einem der vorhergehenden Ansprüche, **dadurch gekennzeichnet, daß** das System zur Erkennung und Anzeige von Verkehrszeichen Informationen ausnutzt, welche von mindestens einem kartenbasierten Navigationssystem und/oder einem Verkehrsinformationssystem stammen.

22. Verfahren nach Anspruch 21, **dadurch gekennzeichnet, daß** das Systems zur Erkennung und Anzeige von Verkehrszeichen über einen Fahrzeugdatenbus mit den kartenbasierten Navigationssystemen und/oder Verkehrsinformationssystemen kommuniziert.

23. Verfahren nach Anspruch 21 oder 22, **dadurch gekennzeichnet, daß** das System zur Verkehrszeichenerkennung mit erhöhter Leistung zu arbeiten beginnt, wenn auf Grundlage von kartenbasierten Informationen bekannt wird, daß das Fahrzeug einen Bereich passiert, der bezüglich der Erkennung von Verkehrszeichen problematisch ist.

24. Verfahren nach einem der Ansprüche 21 bis 23, **dadurch gekennzeichnet, daß** innerhalb problematischer Bereiche zusätzlich gesonderter Erkennungsaufwand betrieben wird, derart daß
a) im Bereich von Ortseingängen und Ortsausgängen, gesondert nach Ortseingangs- und Ortsausgangstafeln gesucht wird,
b) im Bereich von Verkehrsbeeinflussungsanlagen, Wechselschildern oder Ampeln, gesondert auf einen Wechsel der Art und Weise der Ausprägung des Verkehrszeichen geachtet wird,
c) in einem Bereich, in welchem schlechte Sicht durch Nebel oder Regen vorherrscht verstärkt mit kontrastarmen Bilddaten gerechnet wird und dadurch vorzugsweise verstärkt auf eine Kontrastverbesserung der Bilddaten hingewirkt wird.

25. Verfahren nach einem der vorhergehenden Ansprüche, **dadurch gekennzeichnet, daß** in einem im Gesamtsystem integrierten Datenspeicher zusätzlich oder ergänzend zu eventuell bereits vorhandener Information, die Art und/oder die Position und/oder der Zustand und/oder die Sichtbarkeit und/oder die Größe eines erkannten Verkehrszeichens gespeichert wird.

26. Verfahren nach Anspruch 25, **dadurch gekennzeichnet, daß** mittels eines in der Anzeigeeinheit enthaltenen Signalgebers ein akustisches oder optisches Signal ausgegeben wird, wenn sich entlang einer bereits einmal befahrenen Wegstecke eine Änderung bzgl. der Position beziehungsweise des Vorhandenseins eines Verkehrszeichens ergibt.

27. Verfahren nach Anspruch 22, **dadurch gekennzeichnet, daß** die Informationen des kartenbasierten Navigationssystem dazu herangezogen werden, um die Länge von durch ein Fahrzeug befahrene Streckenabschnitte zu ermitteln.

28. Verfahren nach einem der Ansprüche 15 bis 17 oder 27, **dadurch gekennzeichnet, daß** durch ein in der Speichereinheit gespeichertes Programm eine Entscheidungslogik gesteuert wird, mittels derer die Informationsverarbeitungseinheit die Anzeigeeinheit derart lenkt, daß sie das synthetische Bild eines Verkehrszeichens solange anzeigt, bis eine in der Speichereinheit vorgegebene Wegstrecke zurückgelegt ist, welche vorzugsweise klassenspezifisch ist.

29. Vorrichtung zur Erkennung und Anzeige von Verkehrszeichen, bestehend aus
a) einem Bildsensor,
b) einer Informationsverarbeitungseinheit, bestehend aus einem Analysator, einer Weiterverarbeitungseinheit und einem Klassifikator zur Verarbeitung der vom Bildsensor gelieferten Bilddaten,
c) einer Speichereinheit, welche symbolische Darstellungen repräsentierende Bilddaten enthält und in welcher auf Grundlage des Ergebnisses der vom Klassifikator gelieferten Informationen, Bildausschnitte und/oder symbolische Darstellungen repräsentierende Bilddaten durch die Informationsverarbeitungseinheit gespeicherte werden
d) und einer Anzeigeeinheit, auf welche die in der Speichereinheit gespeicherten Bilddaten zur anzeige gebracht werden können,
wobei der Analysator ermittelt, ob ein Bild ein oder mehrere Objekte enthält, welche mit hinreichender Wahrscheinlichkeit Verkehrszeichen sind und in folge diese einem Klassifikator zuführt,
**dadurch gekennzeichnet,**
**daß** die Weiterverarbeitungseinheit einen Separator enthält, welcher die vom Analysator gelieferten Bilddaten in verkehrszeichenspezifische Oberklassen und Unterklassen separiert und klassenspezifische Merkmalsdaten extrahiert, welche anschließend einem Klassifikator zugeführt werden,
**daß** der in der Informationsverarbeitungseinheit beinhaltete Klassifikator auf eine Weise aufgebaut ist, daß die klassenspezifischen Merkmaisdaten abhängig davon, ob sie bei der Klassifikation mit hoher Wahrscheinlichkeit korrekt erkannt wurden, durch entsprechende in einer Speichereinheit gespeicherte, die symbolische Darstellung repräsentierende Bilddaten oder durch die entsprechende ursprünglich vom Bildsensor stammenden Bilddaten ersetzt werden,
**daß** die Informationsverarbeitungseinheit ein Element zur Kombination von Bilddaten enthält, welches die aus dieser Ersetzung resultierenden Bilddaten zu einem synthetischen Bild eines Verkehrszeichens kombiniert und dieses Bild in der Speichereinheit speichert und mittels der Anzeigeeinheit zur Anzeige bringt.

30. Vorrichtung nach Anspruch 29, **dadurch gekennzeichnet, daß** der in der Informationsverarbeitungseinheit beinhaltete Klassifikator hierarchisch, in mehreren Stufen organisiert ist.

31. Vorrichtung nach Anspruch 30, **dadurch gekennzeichnet, daß** der hierarchische Klassifikator eine erste Klassifikationsstufe enthält, welche vorzugsweise hierarchisch ausgeführt ist, zur Identifizierung der Oberklasse des Verkehrszeichens, und daß er eine zweite Klassifikationsstufe enthält, welche vorzugsweise hierarchisch organisiert ist, zur Identifizierung der Unterklasse des Verkehrszeichens.

32. Vorrichtung nach einem der Ansprüche 29 bis 31, **dadurch gekennzeichnet, daß** der in der Informationseinheit beinhaltete Klassifikator so ausgebildet ist, daß er mittels exemplarischen Lernstichproben zu trainieren ist.

33. Vorrichtung nach einem der Ansprüche 29 bis 32, **dadurch gekennzeichnet, daß** der in der Informationseinheit beinhaltete Klassifikator so ausgebildet ist, daß er auf Grundlage eines Vergleichs von Distanzmaßen der ihm gelieferten Merkmalsdaten von den in der Speichereinheit gespeicherten klassentypischen Merkmalsdatensätzen entscheidet.

34. Vorrichtung nach einem der Ansprüche 29 bis 33, **dadurch gekennzeichnet, daß** die Anzeigeeinheit so ausgebildet ist, daß ein im Rahmen der Analyse der Bilddaten des Bildsensors an dem Verkehrszeichen angebrachtes Zusatzschild dargestellt werden kann, wenn bei der Klassifikation zumindest die Oberklasse des Verkehrszeichens mit hoher Wahrscheinlichkeit erkannt wurde.

35. Verfahren nach einem der Ansprüche 29 bis 33 **dadurch gekennzeichnet, daß** die Anzeigeeinheit so ausgebildet ist, daß sie für den Fall, daß im Rahmen der Klassifikation zumindest die Oberklasse eines Verkehrszeichens erkannt wurde, diejenigen Bilddaten anzeigt, die von dem Bereich aus der Umgebung des Verkehrszeichens stammen, in welchem sich typischerweise ein Zusatzschild befindet.

36. Verfahren nach einem der Ansprüche 34 oder 35, **dadurch gekennzeichnet, daß** in der Anzeigeeinheit ein Klassifikator ausgebildet ist, welcher offensichtlich nutzlose Bildinformation verwirft und nicht zur Anzeige bringt.

37. Vorrichtung nach einem der vorhergehenden Ansprüche, **dadurch gekennzeichnet, daß** die Vorrichtung zusätzliche einen Komparator enthält, welcher aus einer Abfolge von Bildern, die während der Vorbeibewegung des Fahrzeugs an einem als Verkehrszeichen erkannten Objekt aufgenommen werden, jeweils das beste Bild ausgewählt, wobei der Komparator die Auswahl anhand definierter Qualitätskriterien durchgeführt, vorzugsweise anhand von Größe und/oder Kontrast und/oder Helligkeit des als Verkehrszeichen erkannten Objektes, und so die Informationsverarbeitungseinheit veranlaßt nur das auf Grundlage dieses besten Bildes generierte synthetische Bild eines Verkehrszeichens, in der Speichereinheit zu speichern und auf der Anzeigeeinheit anzuzeigen.

38. Vorrichtung nach einem der vorhergehenden Ansprüche, **dadurch gekennzeichnet, daß** das Element zur Kombination von Bilddaten bei der Generierung eines synthetischen Bildes eines Verkehrszeichen, diejenigen Bilddaten, die den ursprünglich vom Bildsensor stammenden Bilddaten entsprechen, hinsichtlich einer besseren Erkennbarkeit aufbereitet, derart daß sie
a) größennormiert werden und/oder
b) kontrastnormiert werden und/oder
c) helligkeitsnormiert werden und/oder
d) farbtonnormiert werden.

39. Vorrichtung nach einem der vorhergehenden Ansprüche, **dadurch gekennzeichnet, daß** die Vorrichtung zusätzlich eine Positionsbestimmungseinheit enthält, die Position eines als Verkehrszeichen erkannten Objektes bestimmt.

40. Vorrichtung nach einem der vorhergehenden Ansprüche, **dadurch gekennzeichnet, daß** in der Speichereinheit ein Programm gespeichert ist zur Anwendung einer Entscheidungslogik mittels derer die Informationsverarbeitungseinheit die Anzeigeeinheit derart steuert, daß sie das synthetische Bild eines Verkehrszeichens solange anzeigt, bis ein neues Objekt als Verkehrszeichen erkannt wird, und dessen vereinfachte Darstellung die vorherige ersetzt.

41. Vorrichtung nach einem der vorhergehenden Ansprüche, die Anzeigeeinheit zusätzlich eine Einstelleinheit enthält, mittels welcher die maximale Dauer der Anzeige des synthetischen Bildes eines Verkehrszeichens eingestellt wird.

42. Vorrichtung nach einem der vorhergehenden Ansprüche, **dadurch gekennzeichnet, daß** in der Speichereinheit ein Programm gespeichert ist, welches die zurückgelegte Wegstrecke zwischen der aktuellen Fahrzeugposition und der Position des zuletzt erkannten Verkehrszeichens einer bestimmten Klasse von Verkehrszeichen mit Hilfe von mit an die Informationseinheit gekoppelten Einrichtungen oder Sensoren, ermittelt.

43. Vorrichtung nach Anspruch 42, **dadurch gekennzeichnet, daß** zur Ermittlung der Wegstrecke ein Fahrzeugtachometer oder ein Radsensor zur Ermittlung der zurückgelegten Strecke und ein Zeitgeber an die Informationseinheit gekoppelt sind.

44. Vorrichtung nach einem der Ansprüche 42 und 43, **dadurch gekennzeichnet, daß** die an die Informationseinheit zur Ermittlung der Wegstrecke gekoppelten Einrichtungen und Sensoren über einen Fahrzeugdatenbus gekoppelt sind.

45. Vorrichtung nach einem der Vorhergehenden Ansprüche, **dadurch gekennzeichnet**, in der Speichereinheit ein Programm gespeichert ist zur Anwendung einer Entscheidungslogik mittels derer die Informationsverarbeitungseinheit die Anzeigeeinheit derart steuert, daß sie das synthetische Bild eines Verkehrszeichens solange anzeigt, bis ein neues Objekt als Verkehrszeichen erkannt wird, vorzugsweise als Verkehrszeichen der gleichen oder einer korrespondierenden Klasse erkannt wird, und dessen vereinfachte Darstellung die vorherige ersetzt.

46. Vorrichtung nach einem der vorhergehenden Ansprüche, **dadurch gekennzeichnet, daß** die Anzeigeeinheit zusätzlich einen akustischen Signalgeber enthält, welcher, sobald ein Objekt als Verkehrszeichen erkannt wurde, ein vorzugsweise klassenspezifisches, akustisches Signal ausgibt.

47. Vorrichtung nach einem der vorhergehenden Ansprüche, **dadurch gekennzeichnet, daß** der digitale Bildsensor eine oder mehrere, vorzugsweise monochrome, Digitalkameras enthält, die derart angeordnet sind, daß ihr gemeinsames Blickfeld ausreicht, um alle für den Fahrweg eines Fahrzeuges relevanten Verkehrszeichen unabhängig von der horizontalen und/oder vertikalen Krümmung des Fahrweges zu erfassen.

48. Vorrichtung nach einem der vorhergehenden Ansprüche, **dadurch gekennzeichnet, daß** das System zur Erkennung und Anzeige von Verkehrszeichen mit einem kartenbasierten Navigationssystem und/oder einem Verkehrsinformationssystem verbunden ist, um von diesen stammende Informationen auszunutzen.

49. Vorrichtung nach Anspruch 48, **dadurch gekennzeichnet, daß** eine Verbindung über einen Fahrzeugdatenbus zwischen dem Systems zur Erkennung und Anzeige von Verkehrszeichen und dem kartenbasierten Navigationssystemen und/oder Verkehrsinformationssystemen besteht.

50. Vorrichtung nach Anspruch 48 oder 49, **dadurch gekennzeichnet, daß** das System zur Verkehrszeichenerkennung die Fähigkeit aufweist, mit erhöhter Leistung zu arbeiten, wenn auf Grundlage von kartenbasierten Informationen bekannt wird, daß das Fahrzeug einen Bereich passiert, der bezüglich der Erkennung von Verkehrszeichen problematisch ist.

51. Vorrichtung nach einem der vorhergehenden Ansprüche 29-50, **dadurch gekennzeichnet, daß** im Gesamtsystem ein Datenspeicher integriert ist, in welchem zusätzlich oder ergänzend zu eventuell bereits vorhandener Information, die Art und/oder die Position und/oder der Zustand und/oder die Sichtbarkeit und/oder die Größe eines erkannten Verkehrszeichens gespeichert werden kann.

52. Vorrichtung nach Anspruch 51, **dadurch gekennzeichnet, daß** die Anzeigeeinheit einen Signalgeber enthält, welcher ein akustisches oder optisches Signal ausgibt, wenn sich entlang einer bereits einmal befahrenen Wegstecke eine Änderung in Bezug auf die Position beziehungsweise das Vorhandensein eines Verkehrszeichens ergibt.

53. Vorrichtung nach Anspruch 29, **dadurch gekennzeichnet, daß** die Informationen des kartenbasierten Navigationssystem dazu herangezogen werden, um die Länge von durch ein Fahrzeug befahrene Streckenabschnitte zu ermitteln.

54. Vorrichtung nach einem der Ansprüche 41 bis 43 oder 53, **dadurch gekennzeichnet, daß** in der Speichereinheit ein Programm gespeichert ist zur Anwendung einer Entscheidungslogik mittels derer die Informationsverarbeitungseinheit die Anzeigeeinheit derart steuert, daß sie das synthetische Bild eines Verkehrszeichens solange anzeigt, bis eine in der Speichereinheit vorgegebene Wegstrecke zurückgelegt ist, welche vorzugsweise klassenspezifisch ist.

55. Verwendung eines Verfahrens nach einem der Ansprüche 1 bis 28, für den Betrieb einer Erinnerungshilfe für den Führer eines Fahrzeuges, vorzugsweise für den Einsatz im Straßenverkehr.

56. Verwendung einer Vorrichtung nach einem der Ansprüche 29 bis 54, als Erinnerungshilfe für den Führer eines Fahrzeuges, vorzugsweise für den Einsatz im Straßenverkehr.

57. Verwendung eines Verfahrens nach einem der Ansprüche 15 bis 17, 27 oder 28, zur Inspektion von Verkehrswegen, vorzugsweise für den Einsatz im Straßenverkehr.

58. Verwendung einer Vorrichtung nach einem der Ansprüche 41 bis 43, 53 oder 54, zur Inspektion von Verkehrswegen, vorzugsweise für den Einsatz im Straßenverkehr.

## Claims

1. Method for recognizing and displaying road signs, which analyses and classifies the image data of an image sensor in an information-processing unit and stores, in a memory unit, portions of an image and/or image data which is stored in a memory unit and represents a symbolic representation on the basis of the result of a classification, and displays said portions and/or data by means of a display unit, it being determined in the information-processing unit within the scope of the analysis whether the image data of the image sensor contains one or more objects which, with a sufficient degree of probability, are road signs, and as a consequence these objects being fed to further processing and classification means, **characterized in that**, during the further processing of the image data of the objects, a separation is made into road-sign-specific upper classes and lower classes, **in that**, during the separation, corresponding, class-specific feature data is extracted, **in that** the class-specific feature data is fed to separate classification means, **in that** the class-specific feature data is replaced by corresponding image data which is stored in a memory unit and represents the symbolic representation or by the corresponding image data which originally comes from the image sensor, as a function of whether there is a high probability that said data was correctly recognized during the classification, and the image data resulting from this replacement is combined to form a synthetic image of a road sign and this image is stored in the memory unit and displayed in the display unit.

2. Method according to Claim 1, **characterized in that** the classification takes place hierarchically, in a plurality of classification stages.

3. Method according to Claim 2, **characterized in that** the classification stages are divided up essentially as follows:
a) firstly only the feature data associated with the upper class of the object is fed to a classifier,
aa) given successful classification (there was a high probability that the class could be recognized correctly), the feature data is replaced by the corresponding symbolic representation of the upper class which is stored in the memory unit,
ab) given unsuccessful classification (there was a high probability that the class could not be recognized correctly), the feature data of the upper class and the feature data of the lower class is replaced by the corresponding original image data coming from the image sensor,
b) if the classification of the upper class was successful, the feature data associated with the lower class of the object is subsequently fed to a classifier,
ba) given successful classification (there was a high probability that the class could be recognized correctly), the feature data is replaced by the corresponding symbolic representation of the lower class which is stored in the memory unit,
bb) given unsuccessful classification (there was a high probability that the class could not be recognized correctly), the feature data of the lower class is replaced by the corresponding original image data coming from the image sensor.

4. Method according to one of the preceding claims, **characterized in that** the classifiers which are used in the classification are trained by means of exemplary learning samples.

5. Method according to one of the preceding claims, **characterized in that** the classifiers which are used in the classification decide, on the basis of a comparison of distance measures of the feature data supplied to them, from feature data records which are stored in the memory unit and are typical of classes.

6. Method according to one of Claims 1 to 5, **characterized in that**, in the event of an additional sign which is attached to the road sign having been recognized within the scope of the analysis of the image data of the image sensor, said additional sign is represented on the display unit if there is a high probability that at least the upper class of the road sign was recognized during the classification.

7. Method according to one of Claims 1 to 5, **characterized in that**, in the event of at least the upper class of a road sign having been recognized within the scope of the classification, that image data which originates from the region of the surroundings of the road sign, in which an additional sign is typically located, is displayed by means of the display unit.

8. Method according to Claim 7, **characterized in that** the displaying of the image data is preceded by a classification which rejects obviously useless image information and does not display it.

9. Method according to one of Claims 1 to 8, **characterized in that** there is a division into two method steps within the scope of the analysis in the information-processing unit during which it is determined whether an image contains one or more objects which, with sufficient probability, are road signs, in such a way that
a) in a first method step, image regions are determined, preferably by reference to colour values and/or spatial positions, which, with an above-average probability, contain road signs,
b) and, in a second method step, objects which have a predefined, preferably round or triangular shape are determined in these image regions by means of geometric analysis, preferably by means of correlation methods.

10. Method according to one of the preceding claims, **characterized in that**, from a sequence of images which are taken while the vehicle is moving past an object which is recognized as being a road sign, in each case the best image is selected, the selection being carried out by reference to defined quality criteria, preferably by reference to the size and/or contrast and/or brightness of the object which is recognized as being a road sign, and only the synthetic image of a road sign which is generated on the basis of this best image is stored in the memory unit and displayed on the display unit.

11. Method according to one of the preceding claims, **characterized in that**, during the combination of the image data to form a synthetic image of a road sign, that image data which corresponds to the image data which originally comes from the image sensor is conditioned for the sake of better recognition, in such a way that it
a) is standardized in terms of size and/or
b) standardized in terms of contrast and/or
c) standardized in terms of brightness and/or
d) standardized in terms of colour tone.

12. Method according to one of the preceding claims, **characterized in that**, in addition, the position of an object which is recognized as being a road sign is determined by means of a position-determining unit.

13. Method according to one of the preceding claims, **characterized in that** the display unit is controlled by the information-processing unit by means of a program stored in the memory unit for applying a decision logic, in such a way that it displays the synthetic image of a road sign until a new object is recognized as being a road sign and its simplified representation replaces the previous one.

14. Method according to one of the preceding claims, **characterized in that** the maximum duration of the displaying of the synthetic image of a road sign is set by means of a setting unit contained in the display unit.

15. Method according to one of the preceding claims, **characterized in that** the distance travelled between the current position of the vehicle and the position of the road sign of a specific class of road signs which was recognized last is determined by means of a program in the memory unit, using devices or sensors connected to the information unit.

16. Method according to Claim 15, **characterized in that** the distance travelled is determined by means of a vehicle tachometer which is connected to the information unit, or a wheel sensor for determining the distance travelled and a timer.

17. Method according to one of Claims 15 and 16, **characterized in that** the transmission of data to the devices and sensors connected to the information unit, for the purpose of determining the distance travelled, takes place via a vehicle data bus.

18. Method according to one of the preceding claims, **characterized in that** a program which is stored in the memory unit controls a decision logic by means of which the information-processing unit controls the display unit in such a way that it displays the synthetic image of a road sign until a new object is recognized as being a road sign, preferably recognized as being a road sign of the same class or of a corresponding class, and its simplified representation replaces the previous one.

19. Method according to one of the preceding claims, **characterized in that** an audible signal transmitter within the display unit outputs a preferably class-specific, audible signal as soon as an object has been recognized as being a road sign.

20. Method according to one of the preceding claims, **characterized in that** all the road signs which are relevant for the path of a vehicle are picked up, irrespective of the horizontal and/or vertical curvature of the path, by virtue of a suitable arrangement of one or more, preferably monochrome, digital cameras within the digital image sensor.

21. Method according to one of the preceding claims, **characterized in that** the system for recognizing and displaying road signs utilizes information which originates from at least one map-based navigation system and/or one traffic information system.

22. Method according to Claim 21, **characterized in that** the system for recognizing and displaying road signs communicates via a vehicle data bus with the map-based navigation systems and/or traffic information systems.

23. Method according to Claim 21 or 22, **characterized in that** the system for recognizing road signs starts to operate with increased power if it becomes known, on the basis of map-based information, that the vehicle is passing through a region which is problematic in terms of the recognition of road signs.

24. Method according to one of Claims 21 to 23, **characterized in that** within problematic regions a special recognition effort is additionally made, in such a way that
a) in the region of entries to localities and exits from them, searching is carried out separately in accordance with locality-entry tables and locality-exit tables,
b) in the region of traffic influencing systems, alternating signs or traffic lights, attention is separately paid to a change in the type and method of the embodiment of the road signs,
c) in a region in which there is poor visibility as a result of fog or rain, a calculation is carried out with amplification using image data with poor contrast, and as a result there is preferably an amplified contribution to improving the contrast of the image data.

25. Method according to one of the preceding claims, **characterized in that**, in a data memory which is integrated in the entire system, the type and/or the position and/or the state and/or the visibility and/or the size of a recognized road sign is stored in addition to or as a supplement to information which may already be present.

26. Method according to Claim 25, **characterized in that** an audible or visual signal is output by means of a signal transmitter contained in the display unit if a change in terms of the position or the presence of a road sign occurs along a route along which a vehicle has already travelled once.

27. Method according to Claim 22, **characterized in that** the information of the map-based navigation system is used to determine the length of sections of a route travelled along by a vehicle.

28. Method according to one of Claims 15 to 17 or 27, **characterized in that** a program which is stored in the memory unit controls a decision logic by means of which the information-processing unit controls the display unit in such a way that it displays the synthetic image of a road sign until a route which is predefined in the memory unit and which is preferably class-specific is travelled along.

29. Device for recognizing and displaying road signs, composed of
a) an image sensor,
b) an information-processing unit composed of an analyser, a further processing unit and a classifier for processing the image data supplied by the image sensor,
c) a memory unit which contains image data representing symbolic representations and in which portions of images and/or image data representing symbolic representations is stored by the information-processing unit on the basis of the result of the information supplied by the classifier,
d) and a display unit on which the image data stored in the memory unit can be displayed,
the analyser determining whether an image contains one or more objects which, with sufficient probability, are road signs and consequently supplying them to a classifier, **characterized in that** the further processing unit contains a separator which separates the image data supplied by the analyser into road-sign-specific upper classes and lower classes and extracts class-specific feature data, which is subsequently fed to a classifier, **in that** the classifier contained in the information-processing unit is structured in such a way that the class-specific feature data is replaced by corresponding image data which is stored in a memory unit and represents the symbolic representation or by the corresponding image data which originally comes from the image sensor, as a function of whether there is a high probability that said data was correctly recognized during the classification, **in that** the information-processing unit contains an element for combining image data, which element combines the image data resulting from this replacement to form a synthetic image of a road sign, and stores this image in the memory unit and displays it by means of the display unit.

30. Device according to Claim 29, **characterized in that** the classifier which is contained in the information-processing unit is organized hierarchically, in a plurality of stages.

31. Device according to Claim 30, **characterized in that** the hierarchical classifier contains a first classification stage, which is preferably of hierarchical design, for identifying the upper class of the road sign, and **in that** it contains a second classification stage, which is preferably hierarchically organized, for identifying the lower class of the road sign.

32. Device according to one of Claims 29 to 31, **characterized in that** the classifier contained in the information unit is constructed in such a way that it can be trained by means of exemplary learning samples.

33. Device according to one of Claims 29 to 32, **characterized in that** the classifier contained in the information unit is constructed in such a way that it decides, on the basis of a comparison of distance measures of the feature data supplied to it, from the feature data records which are stored in the memory unit and are typical of class.

34. Device according to one of Claims 29 to 33, **characterized in that** the display unit is constructed in such a way that an additional sign which is attached to the road sign within the scope of the analysis of the image data of the image sensor can be represented if there is a high probability that at least the upper class of the road sign was recognized during the classification.

35. Method according to one of Claims 29 to 33, **characterized in that** the display unit is constructed in such a way that, in the event of at least the upper class of a road sign having been recognized within the scope of the classification, it displays that image data which originates from the region of the surroundings of the road sign in which an additional sign is typically located.

36. Method according to one of Claims 34 or 35, **characterized in that** a classifier which rejects obviously useless image information and does not display it is constructed in the display unit.

37. Device according to one of the preceding claims, **characterized in that** the device additionally contains a comparator which selects in each case the best image from a sequence of images which are taken while the vehicle is moving past an object which is recognized as being a road sign, the comparator making the selection by reference to defined quality criteria, preferably by reference to the size and/or contrast and/or brightness of the object which is recognized as being a road sign, and thus causing the information-processing unit to store in the memory unit only that synthetic image of a road sign which is generated on the basis of this best image, and to display it on the display unit.

38. Device according to one of the preceding claims, **characterized in that** the element for combining image data during the generation of a synthetic image of a road sign conditions, for the sake of better recognition, that image data which corresponds to the image data which originally comes from the image sensor, in such a way it
a) is standardized in terms of size and/or
b) standardized in terms of contrast and/or
c) standardized in terms of brightness and/or
d) standardized in terms of colour tone.

39. Device according to one of the preceding claims, **characterized in that** the device additionally contains a position-determining unit which determines the position of an object which is recognized as being a road sign.

40. Device according to one of the preceding claims, **characterized in that**, in the memory unit, a program is stored for applying a decision logic by means of which the information-processing unit controls the display unit in such a way that it displays the synthetic image of a road sign until a new object is recognized as being a road sign and its simplified representation replaces the previous one.

41. Device according to one of the preceding claims, **characterized in that** the display unit additionally contains a setting unit by means of which the maximum duration of the displaying of the synthetic image of a road sign is set.

42. Device according to one of the preceding claims, **characterized in that**, in the memory unit, a program is stored which determines the distance travelled between the current position of the vehicle and the position of the road sign of a specific class of road signs which was recognized last, using devices or sensors connected to the information unit.

43. Device according to Claim 42, **characterized in that**, in order to determine the distance travelled, a vehicle tachometer or a wheel sensor for determining the distance travelled and a timer are connected to the information unit.

44. Device according to one of Claims 42 and 43, **characterized in that** the devices connected to the information unit for the purpose of determining the distance travelled and sensors are connected via a vehicle data bus.

45. Device according to one of the preceding claims, **characterized in that**, in the memory unit, a program is stored for applying a decision logic by means of which the information-processing unit controls the display unit in such a way that it displays the synthetic image of a road sign until a new object is recognized as being a road sign, preferably recognized as being a road sign of the same class or of a corresponding class and its simplified representation replaces the previous one.

46. Device according to one of the preceding claims, **characterized in that** the display unit additionally contains an audible signal transmitter which outputs a preferably class-specific, audible signal as soon as an object has been recognized as being a road sign.

47. Device according to one of the preceding claims, **characterized in that** the digital image sensor contains one or more, preferably monochrome, digital cameras, which are arranged such that their joint field of vision is sufficient to pick up all the road signs which are relevant for the path of a vehicle, irrespective of the horizontal and/or vertical curvature of the path.

48. Device according to one of the preceding claims, **characterized in that** the system for recognizing and displaying road signs is connected to a map-based navigation system and/or a traffic information system in order to utilize information originating from the latter.

49. Device according to Claim 48, **characterized in that** there is a connection via a vehicle data bus between the system for recognizing and displaying road signs and the map-based navigation systems and/or traffic information systems.

50. Device according to Claim 48 or 49, **characterized in that** the system for recognizing road signs is capable of operating with increased power if it becomes known, on the basis of map-based information, that the vehicle is passing through a region which is problematic in terms of the recognition of road signs.

51. Device according to one of the preceding Claims 29 to 50, **characterized in that**, in the entire system, a data memory is integrated in which the type and/or the position and/or the state and/or the visibility and/or the size of a recognized road sign can be stored in addition or as a supplement to information which may already be present.

52. Device according to Claim 51, **characterized in that** the display unit contains a signal transmitter which outputs an audible or visual signal if a change with respect to the position or the presence of a road sign occurs along a route along which a vehicle has already travelled once.

53. Device according to Claim 29, **characterized in that** the information of the map-based navigation system is used to determine the length of sections of a route travelled along by a vehicle.

54. Device according to one of Claims 41 to 43 or 53, **characterized in that**, in the memory unit, a program is stored for applying a decision logic by means of which the information-processing unit controls the display unit in such a way that it displays the synthetic image of a road sign until a route which is predefined in the memory unit and which is preferably class-specific is travelled along.

55. Use of a method according to one of Claims 1 to 28 for operating a memory aid for the driver of a vehicle, preferably for use in road traffic.

56. Use of a device according to one of Claims 29 to 54, as a memory aid for the driver of a vehicle, preferably for use in road traffic.

57. Use of a method according to one of Claims 15 to 17, 27 or 28, for inspecting roadways and routes, preferably for use in road traffic.

58. Use of a device according to one of Claims 41 to 43, 53 or 54, for inspecting roads and, preferably for use in road traffic.

## Revendications

1. Procédé de reconnaissance et d'affichage d'une signalisation de trafic
qui analyse et classifie les données d'image d'un capteur d'image dans une unité de traitement des informations et qui, en fonction du résultat d'une classification, enregistre dans une unité de mémorisation et représente au moyen d'une unité d'affichage des portions d'image et/ou des données d'image enregistrées dans une unité de mémorisation constituant une représentation symbolique,
une détermination étant effectuée dans le cadre de l'analyse dans l'unité de traitement des informations pour déterminer si les données d'image du capteur d'image contiennent un ou plusieurs objets qui sont avec une probabilité suffisante des signaux de trafic,
et ces objets sont ensuite soumis à un traitement postérieur et à une classification,
**caractérisé en ce**
**qu'**une séparation en classes supérieures et en classes inférieures spécifiques aux signaux de trafic est effectuée lors du traitement postérieur des données d'image des objets,
**que** les données caractéristiques correspondantes spécifiques à la classe sont extraites lors de la séparation,
**que** les données caractéristiques spécifiques à la classe sont soumises à une classification séparée,
**que** les données caractéristiques spécifiques à la classe, suivant qu'elles aient été reconnues correctes avec une forte probabilité lors de la classification, sont remplacées par des données d'image correspondantes enregistrées dans une unité de mémorisation et constituant la représentation symbolique ou par les données d'image originelles correspondantes en provenance du capteur d'image,
et les données d'image résultant de cette substitution sont combinées pour former une image synthétique d'un signal de trafic et cette image est enregistrée dans l'unité de mémorisation et affichée sur l'unité d'affichage.

2. Procédé selon la revendication 1, **caractérisé en ce que** la classification est réalisée de manière hiérarchique en plusieurs niveaux de classification.

3. Procédé selon la revendication 2, **caractérisé en ce que** les niveaux de classification sont organisés pour l'essentiel comme suit :
a) Tout d'abord, seules les données caractéristiques faisant partie de la classe supérieure de l'objet sont amenées à un classificateur.
aa) Si la classification est positive (la classe a pu être reconnue correctement avec une forte probabilité), les données caractéristiques sont remplacées par la représentation symbolique correspondante de la classe supérieure enregistrée dans l'unité de mémorisation.
ab) Si la classification échoue (la classe n'a pu être reconnue correctement avec une forte probabilité), les données caractéristiques de la classe supérieure et les données caractéristiques de la classe inférieure sont remplacées par les données d'image originelles correspondantes en provenance du capteur d'image.
b) Si la classification de la classe supérieure a réussi, les données caractéristiques faisant partie de la classe inférieure de l'objet sont ensuite amenées à un classificateur.
ba) Si la classification est positive (la classe a pu être reconnue correctement avec une forte probabilité), les données caractéristiques sont remplacées par la représentation symbolique correspondante de la classe inférieure enregistrée dans l'unité de mémorisation.
bb) Si la classification échoue (la classe n'a pu être reconnue correctement avec une forte probabilité), les données caractéristiques de la classe inférieure sont remplacées par les données d'image originelles correspondantes en provenance du capteur d'image.

4. Procédé selon l'une des revendications précédentes, **caractérisé en ce que** l'apprentissage des classificateurs utilisés lors de la classification est réalisé à l'aide d'exemples d'échantillons aléatoires d'apprentissage.

5. Procédé selon l'une des revendications précédentes, **caractérisé en ce que** les classificateurs utilisés lors de la classification prennent leur décision en se basant sur une comparaison des cotes de distance entre les données caractéristiques qui leur sont fournies des jeux de données caractéristiques typiques de la classe enregistrés dans l'unité de mémorisation.

6. Procédé selon l'une des revendications 1 à 5, **caractérisé en ce que** dans le cas où dans le cadre de l'analyse des données d'image du capteur d'image un panneau supplémentaire monté sur le signal de trafic est détecté, celui-ci est représenté sur l'unité d'affichage si, lors de la classification, au moins la classe supérieure du signal de trafic a été reconnue avec une forte probabilité.

7. Procédé selon l'une des revendications 1 à 5, **caractérisé en ce que** dans le cas où dans le cadre de la classification au moins la classe supérieure d'un signal de trafic a été reconnue, les données d'image affichées à l'aide de l'unité d'affichage sont celles qui proviennent de l'environnement du signal de trafic dans lequel se trouve généralement un panneau supplémentaire.

8. Procédé selon la revendication 7, **caractérisé en ce que** l'affichage des données d'image est précédé d'une classification qui rejette les informations d'image visiblement inutiles et ne les affiche pas.

9. Procédé selon l'une des revendications 1 à 8, **caractérisé en ce que** dans le cadre de l'analyse dans l'unité de traitement des informations pendant laquelle il est déterminé si une image contient un ou plusieurs objets qui sont avec suffisamment de probabilité des signaux de trafic, il est divisé en deux étapes du procédé de telle manière que
a) des zones d'image sont déterminées dans une première étape du procédé, de préférence au moyen de valeurs chromatiques et/ou de positions dans l'espace, lesquelles contiennent des signaux de trafic avec une probabilité supérieure à la moyenne,
b) et dans une deuxième étape du procédé, des objets ayant une forme prédéfinie, de préférence ronde ou triangulaire, sont déterminés par analyse géométrique dans ces zones d'image, de préférence au moyen d'une méthode par corrélation.

10. Procédé selon l'une des revendications précédentes, **caractérisé en ce que** dans une série d'images qui ont été relevées sur un objet reconnu en tant que signal de trafic pendant le passage du véhicule, c'est à chaque fois la meilleure image qui est sélectionnée, la sélection étant effectuée au moyen de critères de qualité définis, de préférence au moyen de la grandeur et/ou du contraste et/ou de la luminosité de l'objet reconnu en tant que signal de trafic et seule l'image synthétique d'un signal de trafic générée à partir de cette meilleure image est enregistrée dans l'unité de mémorisation et affichée sur l'unité d'affichage.

11. Procédé selon l'une des revendications précédentes, **caractérisé en ce que** lors de la combinaison des données d'image en une image synthétique d'un signal de trafic, les données d'image qui correspondent aux données d'image originellement issues du capteur d'image sont traitées en vue d'être reconnues plus facilement **en ce qu'**elles sont
a) normalisées en taille et/ou
b) normalisées en contraste et/ou
c) normalisées en luminosité et/ou
d) normalisées en couleur.

12. Procédé selon l'une des revendications précédentes, **caractérisé en ce que** la position d'un objet reconnu comme signal de trafic est en plus déterminée à l'aide d'une unité de détermination de la position.

13. Procédé selon l'une des revendications précédentes, **caractérisé en ce que** l'unité d'affichage est commandée par l'unité de traitement des informations par un programme d'application d'une logique de décision enregistré dans l'unité de mémorisation de manière à ce qu'elle affiche l'image synthétique d'un signal de trafic jusqu'à ce qu'un nouvel objet soit reconnu comme signal de trafic et que sa représentation simplifiée remplace la précédente.

14. Procédé selon l'une des revendications précédentes, **caractérisé en ce que** la durée maximale d'affichage de l'image synthétique d'un signal de trafic est réglée au moyen d'une unité de réglage intégrée dans l'unité d'affichage.

15. Procédé selon l'une des revendications précédentes, **caractérisé en ce que** la distance parcourue entre la position actuelle du véhicule et la position du dernier signal de trafic reconnu faisant partie d'une classe donnée de signaux de trafic est déterminée par un programme dans l'unité de mémorisation à l'aide de dispositifs ou de capteurs raccordés à l'unité d'information.

16. Procédé selon la revendication 15, **caractérisé en ce que** la détermination de la distance est réalisée par un tachymètre de véhicule raccordé à l'unité d'information ou un capteur de roue destiné à déterminer la distance parcourue et un générateur d'horloge.

17. Procédé selon l'une des revendications 15 et 16, **caractérisé en ce que** la transmission des données des dispositifs et capteurs raccordés à l'unité d'information pour déterminer la distance est effectuée par le biais d'un bus de données du véhicule.

18. Procédé selon l'une des revendications précédentes, **caractérisé en ce qu'**une logique de décision est commandée par un programme enregistré dans l'unité de mémorisation, l'unité de traitement des informations commandant l'unité d'affichage au moyen de celle-ci de manière à ce qu'elle affiche l'image synthétique d'un signal de trafic jusqu'à ce qu'un nouvel objet soit reconnu comme signal de trafic, de préférence comme signal de trafic de la même classe ou d'une classe correspondante et sa représentation simplifiée remplace la précédente.

19. Procédé selon l'une des revendications précédentes, **caractérisé en ce qu'**un générateur de signal sonore à l'intérieur de l'unité d'affichage émet un signal sonore, de préférence spécifique à une classe, dès qu'un objet est reconnu comme signal de trafic.

20. Procédé selon l'une des revendications précédentes, **caractérisé en ce que** tous les signaux de trafic importants pour le trajet d'un véhicule sont détectés par un arrangement approprié d'une ou de plusieurs caméras numériques de préférence monochromes à l'intérieur du capteur d'image numérique, et ce indépendamment de la courbure horizontale et/ou verticale du trajet.

21. Procédé selon l'une des revendications précédentes, **caractérisé en ce que** le système de reconnaissance et d'affichage des signaux de trafic utilise des informations qui sont issues d'au moins un système de navigation à base de cartes et/ou d'un système d'information de trafic.

22. Procédé selon la revendication 21, **caractérisé en ce que** le système de reconnaissance et d'affichage des signaux de trafic communique avec les systèmes de navigation à base de cartes et/ou les systèmes d'information de trafic par le biais d'un bus de données du véhicule.

23. Procédé selon la revendication 21 ou 22, **caractérisé en ce que** le système de reconnaissance des signaux de trafic commence à fonctionner avec une puissance accrue si les informations cartographiques permettent de reconnaître que le véhicule traverse une zone qui pose des problèmes pour la reconnaissance de signaux de trafic.

24. Procédé selon l'une des revendications 21 à 23, **caractérisé en ce qu'**un effort de reconnaissance particulier supplémentaire est déployé à l'intérieur des zones à problème **en ce que**
a) des panneaux d'entrée d'agglomération et de sortie d'agglomération sont plus particulièrement recherchés dans la zone des entrées d'agglomération et des sorties d'agglomération,
b) il est tenu compte d'un changement du type et de la nature de la mise en évidence des signaux de trafic dans la zone des équipements qui dirigent la circulation, des panneaux alternés ou des feux de circulation,
c) l'on s'attend fortement à rencontrer des données d'image faiblement contrastées dans une zone de mauvaise visibilité en raison du brouillard ou de la pluie et un effort particulier est alors déployé de préférence en vue d'améliorer le contraste des données d'image.

25. Procédé selon l'une des revendications précédentes, **caractérisé en ce que** la nature et/ou la position et/ou l'état et/ou la visibilité et/ou la taille d'un signal de trafic reconnu sont enregistrés dans une mémoire de données intégrée dans le système global en plus ou en complément des informations éventuellement déjà présentes.

26. Procédé selon la revendication 25, **caractérisé en ce qu'**un signal sonore ou visuel est émis au moyen d'un générateur de signal contenu dans l'unité d'affichage si une modification de la position ou de la présence d'un signal de trafic est constatée le long d'un trajet déjà parcouru une fois.

27. Procédé selon la revendication 22, **caractérisé en ce que** les informations du système de navigation à base de cartes sont utilisées pour déterminer la longueur de portions de trajet parcourues par un véhicule.

28. Procédé selon l'une des revendications 15 à 17 ou 27, **caractérisé en ce qu'**une logique de décision est commandée par un programme enregistré dans l'unité de mémorisation, l'unité de traitement des informations commandant l'unité d'affichage au moyen de celle-ci de manière à ce qu'elle affiche l'image synthétique d'un signal de trafic jusqu'à ce qu'une distance prédéfinie dans l'unité de mémorisation, de préférence spécifique à une classe, soit parcourue.

29. Dispositif de reconnaissance et d'affichage d'une signalisation de trafic, composé
a) d'un capteur d'image
b) d'une unité de traitement des informations, composée d'un analyseur, d'une unité de traitement postérieur et d'un classificateur pour traiter les données d'image fournies par le capteur d'image,
c) une unité de mémorisation qui contient des données d'image constituant des représentations symboliques et dans laquelle des portions d'image et/ou des données d'image constituant des représentations symboliques sont enregistrées par l'unité de traitement des informations sur la base du résultat des informations délivrées par le classificateur
d) et une unité d'affichage sur laquelle peuvent être affichées les données d'image enregistrées dans l'unité de mémorisation, l'analyseur déterminant si une image contient un ou plusieurs objets qui sont avec suffisamment de probabilité des signaux de trafic et les achemine ensuite à un classificateur,
**caractérisé en ce**
**que** l'unité de traitement postérieur contient un séparateur qui sépare les données d'image délivrées par l'analyseur en classes supérieures et classes inférieures spécifiques au signal de trafic et extrait les données caractéristiques spécifiques à la classe, lesquelles sont ensuite acheminées à un classificateur,
**que** le classificateur contenu dans l'unité de traitement des informations est structuré de manière à ce les données caractéristiques spécifiques à une classe, suivant qu'elles aient été reconnues correctes avec une forte probabilité lors de la classification, sont remplacées par les données d'image correspondantes enregistrées dans une unité de mémorisation et constituant la représentation symbolique ou par les données d'image originelles issues du capteur d'image,
**que** l'unité de traitement des informations contient un élément pour combiner des données d'image, lequel combine les données d'image résultant de cette substitution pour former une image synthétique d'un signal de trafic et enregistre cette image dans l'unité de mémorisation et l'affiche à l'aide de l'unité d'affichage.

30. Dispositif selon la revendication 29, **caractérisé en ce que** le classificateur contenu dans l'unité de traitement des informations est organisé en plusieurs niveaux.

31. Dispositif selon la revendication 30, **caractérisé en ce que** le classificateur hiérarchique contient un premier niveau de classification, qui est de préférence organisé de manière hiérarchique, pour identifier la classe supérieure du signal de trafic et qu'il contient un deuxième niveau de classification, qui est de préférence organisé de manière hiérarchique, pour identifier la classe inférieure du signal de trafic.

32. Dispositif selon l'une des revendications 29 à 31, **caractérisé en ce que** le classificateur contenu dans l'unité de traitement des informations est configuré de telle manière que son apprentissage est réalisé à l'aide d'exemples d'échantillons aléatoires d'apprentissage.

33. Dispositif selon l'une des revendications 29 à 32, **caractérisé en ce que** le classificateur contenu dans l'unité de traitement des informations est configuré de telle manière qu'il prend sa décision en se basant sur une comparaison des cotes de distance entre les données caractéristiques qui lui sont fournies des jeux de données caractéristiques typiques de la classe enregistrés dans l'unité de mémorisation.

34. Dispositif selon l'une des revendications 29 à 33, **caractérisé en ce que** l'unité d'affichage est configurée de telle manière qu'un panneau supplémentaire monté sur le signal de trafic peut être affiché dans le cadre de l'analyse des données d'image du capteur d'image si, lors de la classification, au moins la classe supérieure du signal de trafic a été reconnue avec une forte probabilité.

35. Dispositif selon l'une des revendications 29 à 33, **caractérisé en ce que** l'unité d'affichage est configurée de telle manière que dans le cas où au moins la classe supérieure d'un signal de trafic a été reconnue dans le cadre de la classification, elle affiche les données d'image qui proviennent de l'environnement du signal de trafic dans lequel se trouve généralement un panneau supplémentaire.

36. Dispositif selon l'une des revendications 34 ou 35, **caractérisé en ce que** dans l'unité d'affichage se trouve un classificateur qui rejette les informations d'image visiblement inutiles et ne les affiche pas.

37. Dispositif selon l'une des revendications précédentes, **caractérisé en ce que** le dispositif contient en plus un comparateur qui sélectionne à chaque fois la meilleure image d'une série d'images qui ont été relevées sur un objet reconnu en tant que signal de trafic pendant le passage du véhicule, le comparateur effectuant la sélection au moyen de critères de qualité définis, de préférence au moyen de la grandeur et/ou du contraste et/ou de la luminosité de l'objet reconnu en tant que signal de trafic et commande ainsi à l'unité de traitement des informations que seule l'image synthétique d'un signal de trafic générée à partir de cette meilleure image soit enregistrée dans l'unité de mémorisation puis affichée sur l'unité d'affichage.

38. Dispositif selon l'une des revendications précédentes, **caractérisé en ce que** l'élément de combinaison des données d'image, lors de la génération d'une image synthétique d'un signal de trafic, prépare les données d'image qui correspondent aux données d'image originellement issues du capteur d'image en vue d'être reconnues plus facilement **en ce qu'**elles sont
a) normalisées en taille et/ou
b) normalisées en contraste et/ou
c) normalisées en luminosité et/ou
d) normalisées en couleur.

39. Dispositif selon l'une des revendications précédentes, **caractérisé en ce que** le dispositif contient en plus une unité de détermination de la position qui détermine la position d'un objet reconnu comme signal de trafic.

40. Dispositif selon l'une des revendications précédentes, **caractérisé en ce qu'**un programme d'application d'une logique de décision est enregistré dans l'unité de mémorisation à l'aide duquel l'unité de traitement des informations commande l'unité d'affichage de manière à ce qu'elle affiche l'image synthétique d'un signal de trafic jusqu'à ce qu'un nouvel objet soit reconnu comme signal de trafic et que sa représentation simplifiée remplace la précédente.

41. Dispositif selon l'une des revendications précédentes, **caractérisé en ce que** l'unité d'affichage contient en plus une unité de réglage qui règle la durée maximale d'affichage de l'image synthétique d'un signal de trafic.

42. Dispositif selon l'une des revendications précédentes, **caractérisé en ce qu'**un programme est enregistré dans l'unité de mémorisation, lequel détermine la distance parcourue entre la position actuelle du véhicule et la position du dernier signal de trafic reconnu faisant partie d'une classe donnée de signaux de trafic à l'aide de dispositifs ou de capteurs raccordés à l'unité d'information.

43. Dispositif selon la revendication 42, **caractérisé en ce qu'**un tachymètre de véhiculé ou un capteur de roue destiné à déterminer la distance parcourue ainsi qu'un générateur d'horloge sont raccordés à l'unité d'information pour déterminer la distance.

44. Dispositif selon l'une des revendications 42 et 43, **caractérisé en ce que** les dispositifs et capteurs raccordés à l'unité d'information pour déterminer la distance sont raccordés par le biais d'un bus de données du véhicule.

45. Dispositif selon l'une des revendications précédentes, **caractérisé en ce qu'**un programme d'application d'une logique de décision est enregistré dans l'unité de mémorisation à l'aide duquel l'unité de traitement des informations commande l'unité d'affichage de manière à ce qu'elle affiche l'image synthétique d'un signal de trafic jusqu'à ce qu'un nouvel objet soit reconnu comme signal de trafic, de préférence comme signal de trafic de la même classe ou d'une classe correspondante et sa représentation simplifiée remplace la précédente.

46. Dispositif selon l'une des revendications précédentes, **caractérisé en ce que** l'unité d'affichage contient en plus un générateur de signal sonore qui émet un signal sonore, de préférence spécifique à une classe, dès qu'un objet est reconnu comme signal de trafic.

47. Dispositif selon l'une des revendications précédentes, **caractérisé en ce que** le capteur d'image numérique contient une ou de plusieurs caméras numériques de préférence monochromes qui sont arrangées de manière à ce que leur champ de vision commun soit suffisant pour détecter tous les signaux de trafic importants pour le trajet d'un véhicule, et ce indépendamment de la courbure horizontale et/ou verticale du trajet.

48. Dispositif selon l'une des revendications précédentes, **caractérisé en ce que** le système de reconnaissance et d'affichage des signaux de trafic est relié à un système de navigation à base de cartes et/ou d'un système d'information de trafic pour utiliser les informations qui en sont issues.

49. Dispositif selon la revendication 48, **caractérisé en ce qu'**il existe une liaison par le biais d'un bus de données du véhicule entre le système de reconnaissance et d'affichage des signaux de trafic et les systèmes de navigation à base de cartes et/ou les systèmes d'information de trafic.

50. Dispositif selon la revendication 48 ou 49, **caractérisé en ce que** le système de reconnaissance des signaux de trafic présente l'aptitude à fonctionner avec une puissance accrue si les informations cartographiques permettent de reconnaître que le véhicule traverse une zone qui pose des problèmes pour la reconnaissance de signaux de trafic.

51. Dispositif selon l'une des revendications 29 à 50, **caractérisé en ce qu'**une mémoire de données est intégrée dans le système global, dans laquelle en plus ou en complément des informations éventuellement déjà présentes peuvent être enregistrés la nature et/ou la position et/ou l'état et/ou la visibilité et/ou la taille d'un signal de trafic reconnu.

52. Dispositif selon la revendication 51, **caractérisé en ce que** l'unité d'affichage contient un générateur de signal qui émet un signal sonore ou visuel si une modification de la position ou de la présence d'un signal de trafic est constatée le long d'un trajet déjà parcouru une fois.

53. Dispositif selon la revendication 29, **caractérisé en ce que** les informations du système de navigation à base de cartes sont utilisées pour déterminer la longueur de portions de trajet parcourues par un véhicule.

54. Dispositif selon l'une des revendications 41 à 43 ou 53, **caractérisé en ce qu'**un programme d'application d'une logique de décision est enregistré dans l'unité de mémorisation à l'aide duquel l'unité de traitement des informations commande l'unité d'affichage de manière à ce qu'elle affiche l'image synthétique d'un signal de trafic jusqu'à ce qu'une distance prédéfinie dans l'unité de mémorisation, de préférence spécifique à une classe, soit parcourue.

55. Utilisation d'un procédé selon l'une des revendications 1 à 28 pour la commande d'un aide-mémoire pour le conducteur d'un véhicule, de préférence en application dans le trafic routier.

56. Utilisation d'un dispositif selon l'une des revendications 29 à 54 en tant qu'aide-mémoire pour le conducteur d'un véhicule, de préférence en application dans le trafic routier.

57. Utilisation d'un procédé selon l'une des revendications 15 à 17, 27 ou 28 pour contrôler des trajets, de préférence en application dans le trafic routier.

58. Utilisation d'un dispositif selon l'une des revendications 41 à 43, 53 ou 54 pour contrôler des trajets, de préférence en application dans le trafic routier.
